# FASCICULE DE BREVET EUROPEEN

(11) **EP 2 142 366 B1**
(45) Date de publication et mention de la délivrance du brevet: **26.01.2011**
(21) Numéro de dépôt: 07849260.0
(22) Date de dépôt: 27.11.2007
(51) Int. Cl.: B32B 7/02, B32B 1/02

(54) **RECIPIENT POUR VIN OU BOISSON SIMILAIRE**
BEHÄLTER FÜR WEIN ODER EIN ÄHNLICHES GETRÄNK
CONTAINER FOR WINE OR SIMILAR BEVERAGE

(30) Priorité: 20.04.2007 EP 07106589
(43) Date de publication de la demande: 13.01.2010
(73) Titulaire: Aisapack Holding SA, 1896 Vouvry (CH)
(72) Inventeur: THOMASSET, Jacques, CH-1896 Vouvry (CH); MATHIEU, Stéphane, CH-1896 Vouvry (CH)
(74) Mandataire: Grosfillier, Philippe
(86) Numéro de dépôt international: PCT/IB2007/054795
(87) Numéro de publication internationale: WO 2008/129369

(56) Documents cités:
- EP-A1- 1 449 646
- JP-A- 1 153 453
- US-A- 4 728 549
- DATABASE WPI Week 199245 Derwent Publications Ltd., London, GB; AN 1992-370520 XP002446746 & JP 04 272825 A (DAINIPPON PRINTING CO LTD) 29 septembre 1992 (1992-09-29)

## Description

### Domaine de l'invention

La présente invention concerne les récipients destinés à conserver une boisson alcoolisée, p.ex. du vin, pendant une durée appropriée afin que les qualités de la boisson soient optimales lors de sa consommation.

### Etat de la technique

La durée de conservation du vin constitue un critère important pour assurer une qualité optimale du produit. En général, le vin est contenu dans des bouteilles en verre.

En fonction du type de cépage, de la méthode de vinification ou d'autres critères, il est parfois nécessaire de conserver un vin pendant de nombreuses années avant de pouvoir le consommer. Ainsi, lorsqu'un vin a été récemment mis bouteille, sa consommation immédiate ne permet généralement pas de profiter pleinement de son potentiel ; un vin trop jeune étant fermé et rarement équilibré. Inversement, un vin consommé tardivement est passé ou souvent madèré ; il s'est vidé de sa substance et par conséquent il devient impropre à la consommation, Il est donc souhaité de consommer un vin au moment de son apogée ; lorsque l'expression des arômes et de la matière est la plus développée. Le mécanisme de vieillissement des vins est un processus complexe qui dépend du type de vin, de la méthode de vinification et de la méthode de conservation. De nombreux facteurs affectent la qualité du vin lors de sa conservation en bouteille. Les variations de température et pressions sont connues pour avoir un effet néfaste sur la conservation du vin. Les variations de température modifient la pression à l'intérieur de la bouteille du fait de la contraction ou dilatation du volume d'air emprisonné dans l'espace de tête. Des variations de température et de pression dans la bouteille sont souvent générées lors du transport. Les transports aériens peuvent générer de fortes pressions négatives dans la bouteille.

Il serait donc souhaitable de pouvoir consommer plus rapidement un vin qui, normalement, devrait être conservé pendant de nombreuses années avant d'être consommé.

EA-A-1 144 9446 décrit une bouteille destinée à contenir une boisson de type vin en bière, comprenant un corps, un fond et une épaule constitués en une structure tri-coude imperméable à l'oxygène, et détenue par moulage-soufflage.

### Exposé géneral de l'invention

Un premier problème que la présente invention se propose de résoudre réside dans la durée minimale de conservation d'un vin ou d'autre boisson similaire qui est nécessaire pour assurer une qualité optimale du produit.

Un deuxième problème que l'invention se propose de résoudre est de diminuer l'impact du transport sur la conservation du vin en diminuant les variations de pression à l'intérieur de du récipient.

Dans l'invention, la solution des problèmes précités consiste à accélérer le vieillissement du vin, par l'intermédiaire d'une oxydation contrôlée, afin d'offrir la possibilité de consommer ledit vin plus rapidement. Plus généralement, la présente invention a pour objectif de prédéfinir et de contrôler la durée de conservation d'un vin ou boisson similaire.

A cet effet, l'invention concerne un récipient avec élément d'ouverture et fermeture, pour vin ou boisson similaire, comprenant trois éléments distincts en matière plastique assemblés par soudage, à savoir un laminé flexible formant la paroi latérale dudit récipient, un fond et une épaule comportant un goulot; caractérisé par le fait que le laminé est imperméable à l'oxygène et qu'au moins un autre pami les deux autres éléments est également imperméable à l'oxygène.

La partie flexible du récipient permet d'absorber les variations de pression occasionnées lors des transports et/ou lorsque le récipient est soumis à des variations de température.

L'invention permet d'associer un vin ou une boisson similaire à un récipient dont la perméabilité à l'oxygène est contrôlée ; la perméabilité à l'oxygène étant définie en fonction d'une durée de conservation.
L'invention permet d'ajuster finement les propriétés de perméabilité du récipient en fonction du vin conservé et de la durée de vieillissement souhaitée.

Dans un mode préféré de réalisation de l'invention, la vitesse d'oxydation du vin est réduite en diminuant la perméabilité du fond ou du goulot. La vitesse d'oxydation du vin est diminuée par deux, et la durée de conservation du vin est approximativement doublée.

Dans un autre mode préféré de réalisation de l'invention, la vitesse d'oxydation du vin est fortement réduite en diminuant conjointement les perméabilité respectives, du fond, du goulot et du bouchon. La durée de conservation du vin peut être beaucoup plus longue.

La présente invention présente plusieurs avantages, en particulier elle permet d'amener un vin à un niveau de maturité optimal au moment de la consommation ; elle permet d'adapter les propriétés du récipient à un type de vin (cépage, méthode de vinification, potentiel de garde..) ; elle permet d'accélérer le vieillissement du vin par une oxydation contrôlée pendant la conservation en récipient ; et enfin elle permet d'indiquer au consommateur quand le produit doit être consommé.

### Exposé détaillé de l'invention

L'invention est décrite plus en détail ci-après au moyen d'exemples illustrés par une unique figure qui représente un récipient permettant de contrôler la vitesse d'oxydation du vin. Cet emballage comprend quatre éléments en matière plastique, à savoir un laminé formant la paroi latérale 2 qui limite les variations de pression à l'intérieur du récipient, un fond 3, une épaule 4 comportant un goulot, et un bouchon 5 pour ouvrir et fermer le récipient. Le récipient selon l'invention est caractérisée par le fait que, le laminé, est imperméable à l'oxygène et que le fond et/ou l'épaule ou les deux au moins imperméables à l'oxygène.

Le laminé formant la paroi latérale 2 comporte plusieurs couches dont au moins une couche à effet barrière à l'oxygène ; ladite couche barrière étant par exemple une feuille d'aluminium ou une couche d'EVOH. Dans l'exposé de l'invention, le terme imperméable est utilisé pour qualifier la perméabilité du laminé vis-à-vis de l'oxygène ; ce qui sous entend que la perméabilité dudit laminé est faible par rapport à la perméabilité des autres parties du récipient. Dans cet esprit, l'utilisation du terme imperméable pour qualifier les propriétés du laminé ne signifie pas forcément que la perméabilité à l'oxygène est nulle. Le laminé comporte également des couches soudantes qui permettent de lier le laminé au goulot et au fond du récipient; lesdites couches soudantes étant par exemple des couches en PE ou PP. Il existe une grande variété de structure multicouche qui permet d'adapter les propriétés du récipient en fonction du produit emballé et de l'effet recherché. Ainsi, le laminé peut être transparent ou opaque, il peut être très flexible ou légèrement rigide, sa surface peut être brillante ou mate, il peut être imprimé localement ou sur toute sa surface. L'épaisseur du laminé est généralement comprise entre 100 et 500 microns. La surface du laminé représente environ 60% à 90% de la surface totale du récipient, et préférentiellement 65% à 85%.

La paroi latérale 2 du récipient 1 peut être fabriquée selon plusieurs méthodes. Une méthode préférentielle consiste à utiliser un laminé sous forme de feuille et conditionné en bobines ; à assembler par soudage dans un procédé continu ou discontinu les extrémités du laminé pour former un corps tubulaire. Cette méthode est particulièrement avantageuse car la décoration peut être faite à plat sur la feuille avant la confection du corps tubulaire. Une autre méthode consiste à co-extruder un corps tubulaire afin de former la paroi latérale 2 du récipient. Cette méthode est souvent moins avantageuse car elle nécessite l'impression du corps tubulaire et permet un choix réduit de structure multicouche.

La paroi latérale 2 du récipient 1 est reliée au niveau de ses extrémités à une épaule 3 et un fond 4 dont les propriétés d'imperméabilité à l'oxygène sont ajustées en fonction de la durée de conservation du vin. L'épaisseur de ces pièces est au moins égale à l'épaisseur du laminé ; et de préférence au moins 2 fois supérieure. L'épaule peut être fabriqué par injection moulage, compression moulage ou extrusion soufflage. L'assemblage de la paroi latérale 2 et de l'épaule 3 peut être fait par soudage ou par surmoulage. Le fond 4 peut être fabriqué par injection moulage, compression moulage ou par thermoformage. L'assemblage du fond 4 et de la paroi latérale 2 peut être fait par soudage ou par surmoulage. Selon un mode préférentiel de fabrication l'assemblage de la paroi latérale 2 avec l'épaule 3 et le fond 4 est fait par soudage.

Les vins peuvent absorber une certaine quantité d'oxygène avant d'être consommés ; la quantité optimale dépendant de nombreux paramètres comme le type de vin et la méthode de vinification. Pour un vin donné, il est d'un grand avantage de pouvoir ajuster la vitesse d'oxydation en fonction de la durée de conservation en bouteille dudit vin. A titre d'exemple, il est considéré dans la suite de l'exposé de l'invention, un vin dont le vieillissement est optimal après absorption de 20 ppm d'oxygène lors de sa conservation en bouteille. Un mode de réalisation préféré de l'invention permet de réaliser un récipient pour une durée de conservation moyenne du vin, ladite durée moyenne de conservation étant généralement égale à 12 mois après la mise en récipient. Le récipient présente une perméabilité globale à l'oxygène de 0.057 ppm/jour/bar lorsque le récipient est conservé à l'air libre selon les méthodes de stockage connues et adaptées pour le vin. Le récipient 1 réalisé selon le mode de l'invention se caractérise par le fait que seule une extrémité du récipient est perméable à l'oxygène. Un premier exemple de récipient réalisé selon de mode comporte une paroi latérale 2 imperméable à l'oxygène, une épaule 3 imperméable à l'oxygène, et un fond fortement perméable à l'oxygène. Un deuxième exemple de récipient selon l'invention comporte une paroi latérale 2 et un fond 4 ayant des propriétés barrière, et une épaule 2 perméable à l'oxygène. Le bouchon 5 présente généralement une faible perméabilité à l'oxygène. Selon le deuxième mode de l'invention, la perméabilité du récipient est divisée par deux ; une seule extrémité de du récipient étant perméable à l'oxygène. Selon le deuxième mode de l'invention, la perméabilité de l'extrémité ayant des propriétés barrière est environ 10 à 100 fois plus faible que la perméabilité de l'autre extrémité. L'extrémité perméable présente une perméabilité à l'oxygène supérieure à 1000 ccO2*µm/m2/jour/bar dans un gaz composé de 100% d'oxygène ; et de préférence supérieure à 10000 ccO2*µm/m2/jour/bar. Le récipient selon l'invention est particulièrement avantageux lorsque l'extrémité perméable est en PP ou PE. L'extrémité imperméable comporte généralement une structure multicouche associant une polyoléfine (PP ou PE) à une résine barrière à l'oxygène comme l'EVOH.. La résine barrière utilisée pour améliorer l'imperméabilité à l'oxygène de l'épaule 3 ou du fond 4 présente une perméabilité inférieure à 1000 ccO2*µm/m2/jour/bar dans un gaz composé de 100% d'oxygène ; et de préférence inférieure à 100 ccO2*µm/m2/jour/bar. La pièce multicouche peut être fabriquée par injection multi matières, par injection surmoulage d'un film, par compression moulage multicouche, par thermoformage d'une feuille multicouche, par extrusion soufflage multicouche. Une autre méthode de fabrication consiste à effectuer un revêtement de fine épaisseur en surface de la pièce et améliorant les propriétés barrières. Une autre méthode consiste à mélanger plusieurs résines ou ajouter des absorbeurs d'oxygène. La perméabilité globale à l'oxygène du récipient 1 réalisé selon le deuxième mode de l'invention, peut être ajustée en jouant sur la perméabilité du bouchon, sur les géométries, sur les épaisseurs, sur le choix des résines, sur la position des couches barrière.

Un autre mode de réalisation de l'invention permet de réaliser un récipient pour une longue durée de conservation du vin, ladite longue durée de conservation pouvant aller jusqu'à 5 ans après la mise en récipient. Le récipient 1 présente une perméabilité globale à l'oxygène de 0.011 ppm/jour/bar lorsque le récipient est conservé pendant 5 ans à l'air libre selon les méthodes de stockage connues et adaptées pour le vin. Ce récipient se caractérise par le fait que tous les éléments qui la composent, à savoir la paroi latérale 2, l'épaule 3, le fond 4 et le bouchon 5, présentent des propriétés barrières élevées à l'oxygène. De préférence, l'épaule 3 et le fond 4 comportent une structure multicouche ; ladite structure multicouche comportant au moins une couche dont la perméabilité à l'oxygène est inférieure à 1000 ccO2*µm/m2/jour/bar dans un gaz composé de 100% d'oxygène ; et de préférence inférieure à 100 cc*µm/m2/jour/bar.

L'invention permet de réaliser des récipients pour une durée de conservation du vin comprise entre 6 mois et 5 ans. Pour une durée de conservation du vin de trois ans, la perméabilité globale du récipient est ajustée afin qu'au bout des trois ans l'oxydation du vin soit optimale. Au bout de trois ans, le vin a absorbé la quantité optimale d'oxygène ; ladite quantité étant de 20 ppm pour le vin considéré dans l'exposé de l'invention. Les propriétés barrière de l'épaule 3, du fond 4 et du bouchon 5 sont ajustées pour que le vin absorbe la quantité précitée dans la durée déterminée. Il est avantageux d'ajuster les propriétés barrière de du récipient en faisant varier la surface du récipient imperméable à l'oxygène. Par exemple, il est possible de réaliser un fond dont 80 % de la surface est imperméable à l'oxygène et 20 % de la surface est perméable à l'oxygène. Ce fond peut être réalisé par exemple en surmoulant un film barrière qui ne couvre que 80% de la surface totale. Une autre méthode consiste à mouler un fond multicouche et ajuster la propagation de la couche barrière lors de la fabrication par injection ou compression moulage.

Le récipient selon l'invention peut être réalisée avec une grande variété de résine. A titre d'exemple, ce récipient peut contenir des résines polyester (PET, PEN), des polyoléfines (PE, PP), des résines polyamides, des résines permettant d'améliorer les propriétés barrière (EVOH, PVDC, PAMXD6). Ce récipient peut également contenir des couches métalliques comme par exemple une couche d'aluminium.

Le récipient décrit selon l'invention est avantageux car on peut ajuster finement la surface perméable à l'oxygène ; il est donc aisé d'ajuster la vitesse d'oxydation du vin et sa durée de conservation. Les perméabilités à l'oxygène du fond 4, de l'épaule 3 et du bouchon 5 peuvent être ajustées indépendamment, ce qui conduit à une grande plage de variation de la perméabilité du récipient et par conséquent des durées de conservations pouvant être très courte ou au contraire très longues.

Le récipient selon l'invention est particulièrement avantageux car il réduit les variations de pression pendant la conservation du vin grâce à une paroi flexible qui se déforme sous l'effet d'une pression relative négative dans la bouteille. Le récipient permet de réduire l'impact négatif des transport sur la conservation et le vieillissement du vin.

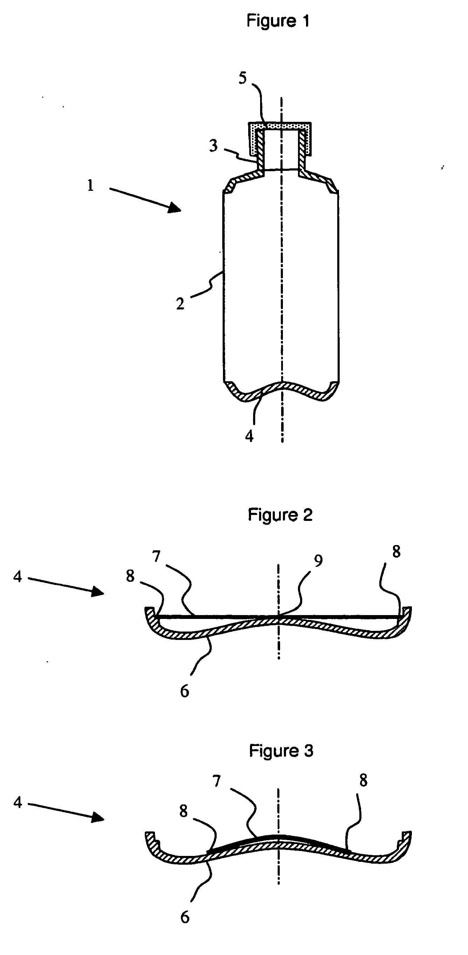

Un mode de réalisation de l'invention particulièrement avantageux pour ajuster la perméabilité de l'emballage est illustré et décrit ci-dessous. Ce mode consiste en la réalisation d'un fond à perméabilité contrôlée. Ce fond 4 illustré sur figures 2 et 3 est formé d'un composant moulé 6 de forte perméabilité à l'oxygène et d'un film de faible perméabilité à l'oxygène 7 couvrant au moins partiellement ledit composant 6. Le film 7 est fixé de façon étanche sur le composant 6, en général par soudure de la périphérie du film 7. La figure 2 illustre une géométrie de fond ayant un composant 6 bombé. Le film 7 est en contact avec le composant 6 seulement sur une partie de sa surface et au moins sur sa périphérie 8. La partie centrale 9 du film 7 est éventuellement reliée par soudage au composant 6 afin de rigidifier le fond 4. Le fond 4 illustré figure 2 présente une faible perméabilité à l'oxygène grâce au film 7 couvrant toute la surface interne du composant 6. Le film 7 qui se situe à l'intérieur de l'emballage se trouve en contact avec le vin ; il convient donc de choisir un film adapté au contact alimentaire. De l'air ou un gaz peut être emprisonné entre le film 7 et la pièce moulée 6. L'emprisonnement d'air peut être utilisé pour améliorer la résistance aux chocs de l'emballage.

La perméabilité du fond 4 est ajustée en modifiant la surface du film 7 couvrant le composant 6. La figure 3 illustre un fond 4 ayant un film à faible perméabilité 7 couvrant partiellement le composant moulé 6. Ce film 7 est soudé sur la surface du composant 6 formant la paroi interne de l'emballage. Le film 7 est au moins relié de façon étanche à la pièce moulée 6 par soudage de son bord 8 sur tout le pourtour.

Une variante de la réalisation du fond 4 consiste à souder le film 7 sur la surface externe de la pièce moulée 6. Dans ce cas, l'emprisonnement d'air est à éviter ou doit être maîtrisé car l'oxygène compris dans ce volume d'air modifie le vieillissement du vin.

Le film 7 est fixé de façon étanche sur le composant 6 en général par soudure. Cette soudure peut être faite par les différents procédés utilisés sur le marché. On notera notamment la soudure thermique, la soudure par induction, la soudure par ultra sons, la soudure par air chaud ... Ces technologies sont parfaitement maîtrisées sur le marché. On peut éventuellement ajouter une soudure sur une autre partie de la pièce pour améliorer la cohésion des 2 pièces.

Le matériau du film 7 sera de préférence compatible avec le matériau du composant 6 pour permettre un assemblage par soudure. L'assemblage peut être fait en reprise sur une machine d'assemblage spécialement conçue. Il peut également être fait en ligne, au moment de la fabrication de l'emballage. Actuellement les composants 6 formant le fond 4 sont généralement en PE ou en PP. Mais cette technique d'apport de barrière pourrait également être appliquée à d'autres matériaux tels que le PET, le PA, ou tout autre thermoplastique.

La barrière du film 7 est apportée par une couche fonctionnelle telle que l'EVOH, la métallisation, l'enduction SiOₓ ou AlOₓ, ou toute autre technologie barrière disponible sur le marché du film. Cette variété de films permet d'envisager une vaste gamme de niveaux de barrière. Cette barrière pourra également être de différents types tels que la barrière à l'oxygène, la barrière au CO2, la barrière aux arômes, pour ne citer que les plus courantes.

Cette couche fonctionnelle est associée au minimum à une couche soudante compatible avec le composant 6. On peut ensuite envisager l'ajout d'une ou plusieurs autres couches suivant les fonctions que l'on souhaite apporter à ce film 7 et/ou à ce composant 6. On peut ainsi avoir une couche de protection, une couche anti perforation, ou encore une couche imprimée. Le film 7 est produit selon les technologies connues pour produire des films telles que la coextrusion, le complexage (ou contrecollage), la lamination à chaud (ou l'extrusion lamination).

## Revendications

1. Récipient avec élément d'ouverture et fermeture (5), pour vin ou boisson similaire, comprenant trois éléments distincts en matière plastique (2-4) fabriqués séparément et assemblés par soudage, à savoir un laminé flexible (2) formant la paroi latérale dudit récipient, un fond (4) et une épaule (3) comportant un goulot; **caractérisé par le fait que** ledit laminé (2) est imperméable à l'oxygène et que parmi les deux autres éléments (3,4), au moins un est également imperméable à l'oxygène.

2. Récipient selon l'une quelconque des revendications précédentes dans lequel la surface du laminé (2) représente 60 % à 90 % de la surface totale du récipient.

3. Récipient selon la revendication précédente dans lequel la surface du laminé (2) représente 65 % à 85 % de la surface totale du récipient.

4. Récipient selon l'une quelconque des revendications précédentes dans lequel l'épaule (3) est imperméable à l'oxygène.

5. Récipient selon la revendication 4 dans lequel le fond est perméable à l'oxygène.

6. Récipient selon la revendication 5 dans lequel le fond comprend un composant moulé (6) de forte perméabilité à l'oxygène et un film (7) de faible perméabilité à l'oxygène.

7. Récipient selon l'une quelconque des revendications 1 à 4 dans lequel le fond (4) est imperméable à l'oxygène.

8. Récipient selon l'une quelconque des revendications précédentes comprenant un élément de fermeture (5) qui est perméable à l'oxygène.

## Claims

1. Container with an opening and closing element (5) for wine or a similar beverage, comprising three distinct elements (2-4) made of plastic manufactured separately and and assembled by welding, these being a flexible laminate (2) that forms the side wall of the said container, an end wall (4) and a shoulder (3) comprising a neck; **characterized in that** the said laminate (2) is oxygen impermeable and **in that**, of the other two elements (3, 4), at least one is also oxygen impermeable.

2. Container according to the preceding claim in which the surface area of the laminate (2) represents 60% to 90% of the total surface area of the container.

3. Container according to the preceding claim in which the surface area of the laminate (2) represents 65% to 85% of the total surface area of the container.

4. Container according to any one of the preceding claims in which the shoulder (3) is oxygen impermeable.

5. Container according to Claim 4 in which the end wall is oxygen permeable.

6. Container according to Claim 5 in which the end wall comprises a moulded component (6) that is highly oxygen permeable and a film (7) that is only slightly oxygen permeable.

7. Container according to any one of Claims 1 to 4 in which the end wall (4) is oxygen impermeable.

8. Container according to any one of the preceding claims, in which the closure element (5) is oxygen permeable.

## Patentansprüche

1. Behälter mit Öffnungs- und Schließelement (5) für Wein oder ein ähnliches Getränk, der drei separate Kunststoffelemente (2 - 4) umfasst, die getrennt hergestellt und durch Schweißen zusammengebaut sind, und zwar ein flexibles Laminat (2), das die Seitenwand des Behälters bildet, einen Boden (4) und eine einen Hals umfassende Schulter (3), **dadurch gekennzeichnet, dass** das Laminat (2) sauerstoffundurchlässig ist und dass unter den beiden anderen Elementen (3, 4) mindestens eines ebenfalls sauerstoffundurchlässig ist.

2. Behälter nach dem vorhergehenden Anspruch, wobei die Oberfläche des Laminats (2) 60% bis 90% der Gesamtoberfläche des Behälters darstellt.

3. Behälter nach dem vorhergehenden Anspruch, wobei die Oberfläche des Laminats (2) 65% bis 85% der Gesamtoberfläche des Behälters darstellt.

4. Behälter nach einem der vorhergehenden Ansprüche, wobei die Schulter (3) sauerstoffundurchlässig ist.

5. Behälter nach Anspruch 4, wobei der Boden sauerstoffdurchlässig ist.

6. Behälter nach Anspruch 5, wobei der Boden eine stark sauerstoffdurchlässige Formkomponente (6) und eine schwach sauerstoffdurchlässige Folie (7) umfasst.

7. Behälter nach einem der Ansprüche 1 bis 4, wobei der Boden (4) sauerstoffundurchlässig ist.

8. Behälter nach einem der vorhergehenden Ansprüche, mit einem sauerstoffdurchlässigen Schließelement (5).
